Europäisches Patentamt

(19) European Patent Office

Office européen des brevets

(11) Publication number: **0 049 989**
**B1**

(12) **EUROPEAN PATENT SPECIFICATION**

(45) Date of publication of patent specification: **05.02.86**

(21) Application number: **81304609.1**

(22) Date of filing: **05.10.81**

(51) Int. Cl.⁴: **G 11 B 5/52, H 04 N 5/783**

(54) Video tape recording/reproducing apparatus.

(30) Priority: **03.10.80 JP 138952/80**
**03.10.80 JP 138953/80**

(43) Date of publication of application:
**21.04.82 Bulletin 82/16**

(45) Publication of the grant of the patent:
**05.02.86 Bulletin 86/06**

(84) Designated Contracting States:
**DE FR GB NL**

(56) References cited:
**GB-A-2 009 998**
**GB-A-2 035 658**
**GB-A-2 070 842**
**US-A-4 197 562**

**Patent Abstracts of Japan, vol. 4, no. 62, 9 May
1980, page 140P10**
**Patent Abstracts of Japan, vol. 4, no. 5, 16
January 1980, page 15E165**

(73) Proprietor: **Matsushita Electric Industrial Co.,
Ltd.**
**1006, Oaza Kadoma**
**Kadoma-shi Osaka-fu, 571 (JP)**

(72) Inventor: **Kobayashi, Masaaki**
**1-17-2, Uguisudai**
**Kawanishi-shi Hyogo-ken (JP)**
Inventor: **Kohda, Minoru**
**1-26, Otokoyamashigetsu**
**Yawata-shi Kyoto-fu (JP)**

(74) Representative: **Harrison, Philippa Dinah et al
A. A. THORNTON & CO Northumberland House
303-306 High Holborn
London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention generally relates to a video tape recorder/reproducer which reproduces pictures without noise bars or with noise bars of reduced intensity in so-called trick motion reproduction modes such as a fast motion reproduction mode, a fast reverse motion reproduction mode, a slow motion reproduction mode or a still reproduction mode.

There has been recent demand for such trick motion mode reproduction in the video tape recorder/reproducer field. In the still or slow motion modes, methods have been proposed to reduce noise bars on the reproduced picture. However, no methods have been proposed for reducing the noise bars in the fast motion mode or the fast reverse motion mode.

United Kingdom patent application GB 2009998A discloses a magnetic video recording and reproducing apparatus which can automatically provide an optimum image in the still image playback mode. No provision is made for reducing the noise bars on the picture either in the fast reproduction mode or in the slow reproduction mode.

United States patent 4,197,562 discloses a helical scan video signal tape recorder wherein two auxiliary heads are provided in addition to the two main heads. The vertical and horizontal positions of the auxiliary heads are determined so as to effectively reproduce a slow motion picture from a magnetic tape on which the signals are recorded using the so-called "azimuth" recording method. The output of each head is selectively supplied to a video signal demodulating circuit via a switching circuit. The problem with this is that the signals from the auxiliary and main heads are alternately selected by the switch circuit at 10Hz cycle or field by field. This means that reductions in the output signal which occur within a field cannot be compensated for. Also, no proposal is made for reducing noise bars in fast reproduction mode.

The present invention provides a video tape recording/reproducing apparatus comprising a first main rotary head (M1) and a second main rotary head (M2) whose azimuth angles are different to each other, a first sub-rotary head (S1) fixed adjacent the first main rotary head (M1), and a second sub-rotary head (S2) fixed adjacent the second main rotary head (M2), wherein in the reproduction mode a magnetic tape (6) may be driven at a speed different from the speed in the recording mode, and wherein lower signal level sections of the reproduced signal from the first main rotary head (M1) are substituted by the reproduced signal from the first sub-rotary head (S1) and lower signal level sections of the reproduced signal from the second main rotary head (M2) are substituted by the reproduced signal from the second sub-rotary head (S2) characterised by a first means (53, 58, 55) for comparing the amplitudes of the signals from the first main rotary head (M1) and the first sub-rotary head (S1), second means (73, 78, 75) for comparing the amplitudes of signals from the second main rotary head (M2) and the second sub-rotary head (S2), a third means (52, 57, 54) connected to said first means (53, 58, 55) for selecting for reproduction the signal with the greater amplitude, and a fourth means (72, 77, 74) connected to said second means (73, 78, 75) for selecting for reproduction the signal with the greater amplitude.

Apparatus in accordance with the invention thus provides a reproduced picture having reduced or eliminated noise bars in the fast motion mode or the fast reverse motion mode. Furthermore, a similar effect can be achieved in the slow motion mode or the slow reverse motion mode.

In order that the present invention may be more readily understood, an embodiment thereof will now be described by way of example with reference to the accompanying drawings, in which:

Fig. 1 is a principal part of a video tape recorder/reproducer of the preferred embodiment of this invention;

Fig. 2 is a recorded pattern on a magnetic tape;

Fig. 3 (a)—(i) shows signals appearing at various points in Fig. 4;

Fig. 4 is a block diagram of a circuit which may be used with the apparatus of Fig. 1;

Fig. 5 is a principal part of a video tape recorder/reproducer of another embodiment of this invention; and

Fig. 6 shows the arrangement of the rotary heads in the apparatus of Fig. 5.

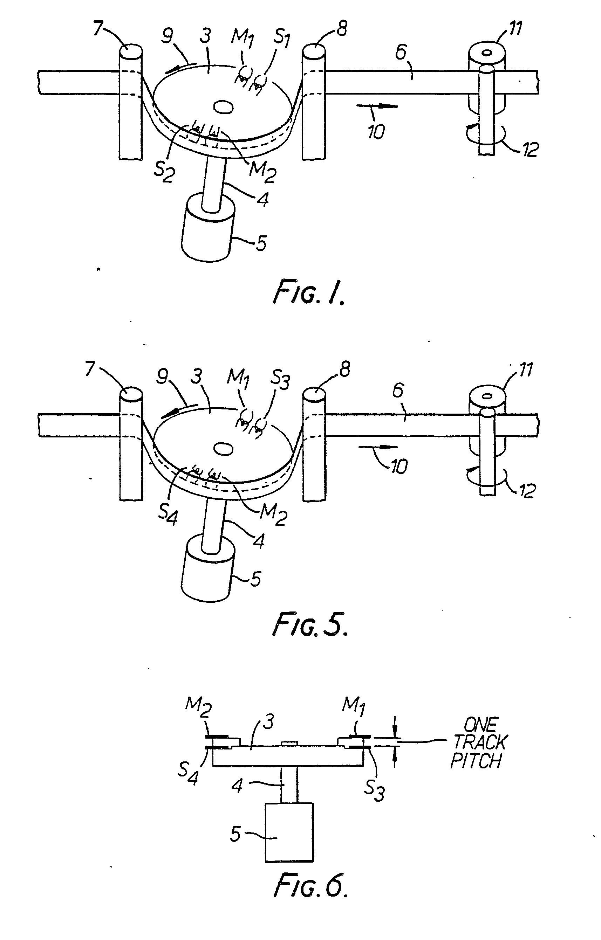

Fig. 1 shows a construction of the main rotary heads and the sub-rotary heads of this invention. One main rotary head M1 has +6° azimuth angle. One sub-rotary head S1 has −6° azimuth angle. Another main rotary head M2 has −6° azimuth angle. Another sub-rotary head S2 has +6° azimuth angle. These main heads are fixed on a rotatable disk 3 and separated 180° from each other with respect to the center of the disk 3. The main rotary heads M1 and M2 and the sub-rotary heads S1 and S2 are located on the same rotational plane of the rotatable disk 3. The sub-rotary head S1 is fixed near the main rotary head M1. For example, the distance between them may be equivalent to the two horizontal sync intervals on a magnetic tape 6.

The rotatable disk 3 is driven by a motor 5 through a rotary shaft 4. The rotating direction is shown by an arrow 9. The rotating rate of the disk 4 may be 1800 r.p.m. The magnetic tape 6 is driven so as to pass guide posts 7 and 8 by a pinch roller 11 and a capstan 12. The magnetic tape 6 is wound around the rotatable disk 3 over 180°.

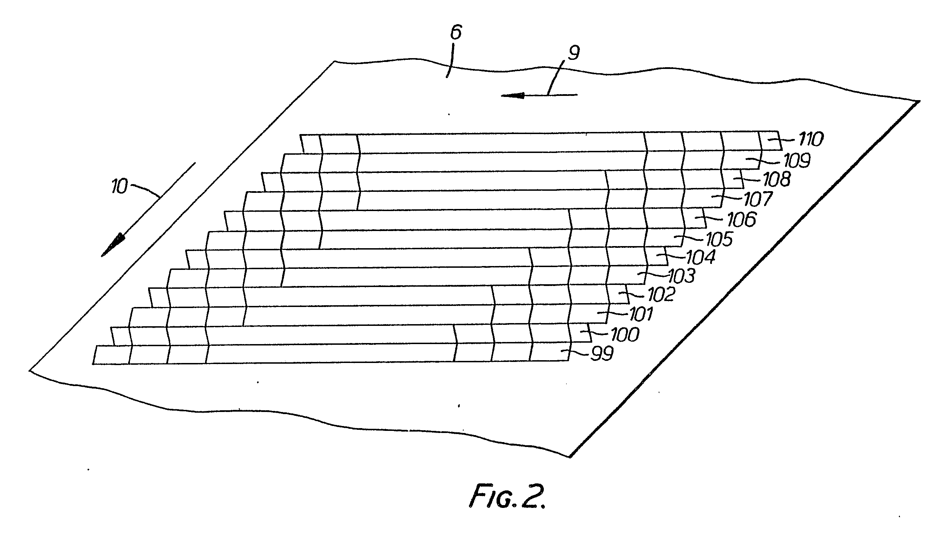

In Fig. 2, video tracks 99, 101, 103, 105, 107 and 109 are recorded by main the video head whose azimuth angle is +6°. Video tracks 100, 102, 104, 106, 108 and 110 are recorded by the other main video head whose azimuth angle is −6°. Slant lines of these tracks indicate recorded positions of the horizontal sync signals. The angle of a slant line shows the azimuth angle of the recording head (the slant lines are omitted at the center part of the field).

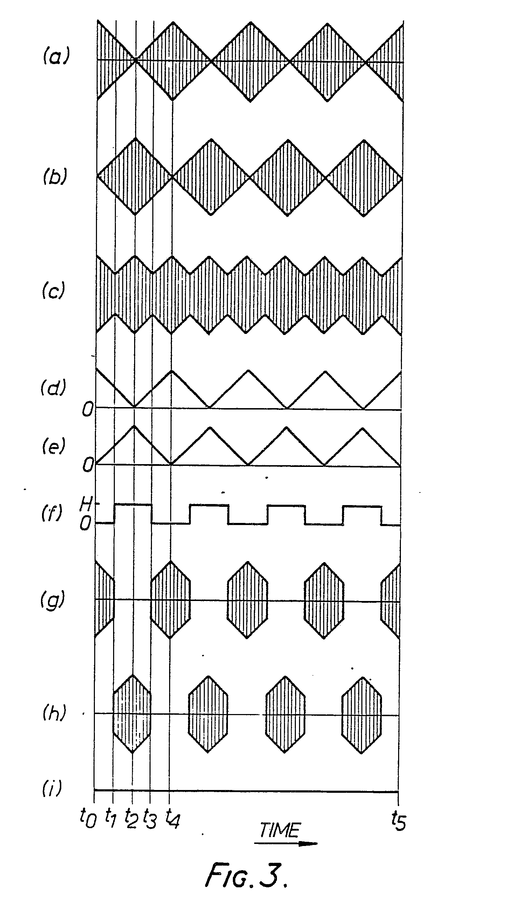

The track pattern shown in Figure 2 is the state of normal speed reproduction in which the reproducing speed is the same as the recording speed. In the normal speed reproduction mode, if the main rotary video head M1 scans the start point of the track 101, the head scans the end point of track 101 at the end of one field. In the fast motion mode, for example, nine times speed motion mode, if the main rotary head M1 scans the start point of the track 101, the head scans the end point of the track 109 at the end of one field. As the sub-rotary head S1 is fixed near the main rotary head M1 and on the same plane of rotation, the sub-rotary head S1 scans approximately the same trace which is scanned by the main rotary head M1. In nine times speed motion mode, since the main rotary head M1 has $+6°$ azimuth angle, an output signal as shown in Figure 3(a) is provided by the main rotary head M1. And, since the sub-rotary head S1 has $-6°$ azimuth angle, an output signal as shown in Figure 3(b) is provided by the sub-rotary head S1.

Output signals of rotary heads in conventional video tape recorder/reproducers include a frequency modulated luminance signal whose carrier frequency is about 3.9 MHz and a down converted chrominance signal whose frequency is about 629 KHz.

Figure 3(i) shows a time scale in which "$t_0$" is the beginning of a field and "$t_5$" is the end of the field.

In the fast motion reproduction mode, the conventional video tape recorder/reproducer reproduces pictures with several noise bars which are caused by the zero or lower signal level portions of the signals produced by the rotary heads. Occurrence of these noise bars is a defect of the conventional video tape recorder/reproducer.

In accordance with this invention, the lower signal level periods of the main rotary head M1 are compensated by the higher signal level periods of the sub-rotary head S1 as shown in Figure 3(c). Consequently, the compensated signal shown in Figure 3(c) does not have any lower level portions, so that the reproduced picture has no noise bars.

Figure 4 shows a block diagram of how this may be achieved. The output signal of the main rotary head M1 is amplified by a pre-amplifier 51 and applied to a gate circuit 52 and an amplitude detector 53. An output signal of the gate circuit 52 is applied to an adder 54. An output signal of the amplitude detector 53 is applied to a negative input terminal of a comparator 55. The output signal of the sub-rotary head S1 is amplified by a pre-amplifier 56 and applied to a gate circuit 57 and an amplitude detector 58. An output signal of the gate circuit 57 is applied to the adder 54. An output signal of the adder 54 is applied to a switch circuit 59. An output signal of the amplitude detector 58 is applied to a positive input terminal of the comparator 55. An output signal of comparator 55 is applied to a D input terminal of a D type flip-flop 60. An output signal of a horizontal sync separator 61 is applied to a CP terminal of the D flip-flop 60. An output signal of a Q terminal of the D flip-flop 60 is applied to a control terminal of the gate circuit 52 and a control terminal of a switch circuit 62. An output signal of a $\overline{Q}$ terminal of the D flip-flop 60 is applied to a control terminal of the gate circuit 57. The output signals of the main rotary head M2 and the sub-rotary head S2 are processed by pre-amplifiers 71, 76, gate circuits 72, 77, amplitude detectors 73, 78, a comparator 75, a D type flip-flop 79 and an adder 74 in the same manner for the output signals of the main rotary head M1 and the sub-rotary head S1 as described above. An output signal of the adder 74 is applied to the switch circuit 59. An output signal of the switch circuit 59 is applied to the horizontal sync separator 61, the switch circuit 62 and a delay circuit 64 through a video signal demodulator 63. An output signal of the switch circuit 62 is applied to an output terminal 65.

When for example, the pre-amplifier 51 supplies the signal shown in Figure 3(a), the amplitude detector 53 supplies an envelope signal shown in Figure 3(d). The amplitude detector 53 is constructed by a conventional diode detector. Similarly, when the pre-amplifier 56 supplies a signal shown in Figure 3(b), the amplitude detector 58 supplies an envelope signal shown in Figure 3(e). The construction of the amplitude detector 58 is the same as that of the amplitude detector 53. These envelope signals are compared by the comparator 55. The resultant signal is applied to the D type flip-flop 60. Further, since demodulated horizontal sync signals (described later) are applied to the CP terminal, a signal (which is shown in Figure 3(f) and is synchronized with the horizontal sync signal) is obtained at the Q terminal of the D flip-flop 60.

When the level of the output signal of the sub-rotary head S1 is larger than that of the output signal of the main rotary head M1, the comparator 55 outputs a High ("H") level signal shown in Figure 3(f). When the level of the output signal of the sub-rotary head S1 is smaller than that of the output signal of the main rotary head M1, the comparator 55 outputs a Low ("L") level signal shown in Figure 3(f). The $\overline{Q}$ terminal outputs an inverted polarity signal. When the Q terminal level is "L" level, the gate circuit 52 passes the signal which is the high level portion of the output signal of the rotary head M1 as shown in Figure 3(g). When the $\overline{Q}$ terminal level is "L" level, the gate circuit 57 passes the signal which is the high level portion of the output signal of the rotary head S1, as shown in Figure 3(h). The gate circuits 52 and 57 are conventional analog gate circuits which may be constituted by field effect transistors (FET).

The signals shown in Figure 3(g) and (h) are added by the adder 54. As a result, the lower signal level position of the main rotary head M1 is compensated by the higher signal level position of the sub-rotary head S1 as shown in Figure 3(c). As the compensating timing is synchronized with the horizontal sync signal using the D type flip-flop 60, switching noise does not appear on the picture. During this field, the switch circuit 59 passes the output signal of the adder 54 to the video signal demodulator 63. The video signal demodulator 63 comprises a luminance signal demodulator and a chrominance signal demodulator (both are well known). The luminance signal demodulator demodulates frequency modulated luminance signals. The chrominance signal demodulator converts down-converted chrominance signals to carrier chrominance signals. The demodulated video signal is applied to the horizontal sync separator 61, the delay circuit 64 and the switch circuit 62. The horizontal sync separator 61 separates horizontal sync signal. The delay circuit 64 delays the demodulated video signal. The delay time is the differential time between the sub-rotary head S1 and the main rotary head M1. In this embodiment, the differential time corresponds to two horizontal scanning periods. A glass delay line or a semi-conductor delay line such as a charge coupled device can be used as a delay circuit 64.

A semi-conductor delay line can exactly adjust the differential time between the heads. The main rotary head M1 scans two horizontal scanning periods in advance of the sub-rotary head S1. When the output signal of the Q terminal of the D type flip-flop 60 is "H" level, the switch circuit 62 connects the delay circuit 64. When the output signal of the Q terminal of the D type flip-flop 60 is "L" level, the switch circuit 62 connects the video signal demodulator 63. By means of this switching operation, the differential time is cancelled.

During the next field, the output signal of the main rotary head M2 and the output signal of the sub-rotary head S2 are processed in the same manner.

As described above, by using sub-rotary heads whose azimuth angle and rotating plane are properly selected, the lower signal level portions are compensated for so that no noise bar appears in the picture.

In the fast reverse motion reproduction mode, the lower signal level portions from the main rotary head M1 are also present. The lower signal level portions of the main rotary head M1 are compensated by the higher signal level portions of the sub-rotary head S1 in the same manner as above. As a result, no noise bar appears in the picture.

As described above, the switching timings of the main rotary head M1 and the sub-rotary head S1 are synchronized with the reproduced horizontal sync signal. As a result, switching noise does not appear on the picture. If appearance of switching noise is allowable, the D type flip-flops 60 and 79 are not necessary.

If the plane of rotation of the sub-rotary heads S1 and S2 is spaced by an even number of track pitches from the plane of rotation of the main rotary heads M1 and M2, noise bars on the picture can also be eliminated in the same way as described above. In this description, a recorded track width is equal to the width of these heads M1, M2, S1 and S2. If the width of the sub-rotary head S1 or S2 is wider than the width of the main rotary head M1 or M2, the noise bars on the picture can still be eliminated.

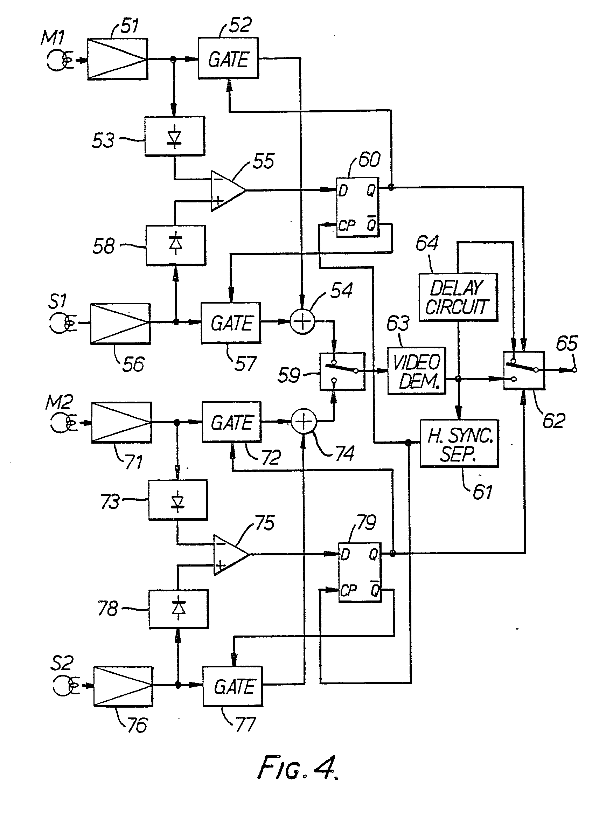

Figure 5 and Figure 6 show another combination of the sub-rotary heads. A sub-rotary head S3 has +6° azimuth angle, and a sub-rotary head S4 has −6° azimuth angle. The plane of rotation of these sub-rotary heads S3 and S4 is one track pitch lower than the plane of rotation of the main rotary heads M1 and M2. The sub-rotary head S3 is fixed near the main rotary head M1. For example, the distance between them may be equivalent to two horizontal sync intervals on the magnetic tape 6. The sub-rotary head S4 is fixed near the main rotary head M2. Again, the distance between them may be equivalent to two horizontal sync intervals.

In the fast motion reproduction mode, the signal produced by the sub-rotary head S3 is very similar to the signal shown in Figure 3(b). By using the same circuit as shown in Figure 4, the lower signal level portions from the main rotary heads M1 are compensated by the higher signal level portions from the sub-rotary head S3. As a result, no noise bar appears on the picture. If the plane of rotaion of the sub-rotary heads S3 and S4 is spaced by an odd number of track pitches from the plane of rotation of the main rotary heads M1 and M2, approximately the same effect will be obtained.

**Claims**

1. A video tape recording/reproducing apparatus comprising a first main rotary head (M1) and a second main rotary head (M2) whose azimuth angles are different to each other, a first sub-rotary head (S1) fixed adjacent the first main rotary head (M1), and a second sub-rotary head (S2) fixed adjacent the second main rotary head (M2), wherein in the reproduction mode a magnetic tape (6) may be driven at a speed different from the speed in the recording mode, and wherein lower signal level sections of the reproduced signal from the first main rotary head (M1) are substituted by the reproduced signal from the first sub-rotary head (S1) and lower signal level sections of the reproduced signal from the second main rotary head (M2) are substituted by the reproduced signal from the second sub-rotary head (S2) characterised by a first means (53, 58, 55) for comparing the amplitudes of the signals from the first main rotary head (M1) and the first sub-rotary head (S1), second means (73, 78, 75) for comparing the amplitudes of the signals from the second main rotary head (M2) and the second sub-rotary head (S2), a third means (52, 57, 54) connected to said first means (53, 58, 55) for selecting for reproduction the signal with the greater amplitude, and a fourth means (72, 77, 74) connected to said second means (73, 78, 75) for selecting for reproduction the signal with the greater amplitude.

2. A video tape recording/reproducing apparatus in accordance with claim 1, wherein said first means comprises a first amplitude detector (53) for detecting the amplitude of the reproduced signal from the first main rotary head (M1), a second amplitude detector (58) for detecting the amplitude of the reproduced signal from the first sub-rotary head (S1) and a first comparator (55) for comparing the signal level of an output signal of the first amplitude detector (53) with the signal level of an output signal of the second amplitude detector (58) wherein said second means comprises a third amplitude detector (73) for detecting the amplitude of an output signal of the second main rotary head (M2), a fourth amplitude detector (78) for detecting the amplitude of the output signal of the second sub-rotary head (S2) and a second comparator (75) for comparing the signal level of an output signal of the third amplitude detector (73) with the signal level of an output signal of the fourth amplitude detector 78, wherein said third means comprises a first gate circuit (52) for gating the output signal of the first main rotary head (M1) according to an output signal of the first comparator (55), a second gate circuit (57) for gating the output signal of the first sub-rotary head (S1) according to the output signal of the first comparator (55), and a first adder (54) for adding an output signal of the first gate circuit (52) with an output signal of the second gate circuit (57) wherein said fourth means comprises a third gate circuit (72) for gating the output signal of the second main rotary head (M2) according to an output signal of the second comparator (75), a fourth gate circuit (77) for gating the output signal of the second sub-rotary head (S2) according to the output signal of the second comparator (75), and a second adder (74) for adding an output signal of the third gate circuit (72) with an output signal of the fourth gate circuit (78) and wherein there is further provided a first switch circuit (59) for alternately selecting an outut signal of the first adder (54) and an output signal of the second adder (74) on a field by field basis thereby to obtain a continuous reproduced signal.

3. A video tape recording/reproducing apparatus according to any one of claims 1 or 2, characterised in that the azimuth angle of said first sub-rotary head (S1) is equal to that of said second main rotary head, (M2), and the azimuth angle of said second sub-rotary head (S2) is equal to that of said first main rotary head (M1).

4. A video tape recording/reproducing apparatus according to claim 3, characterised in that the main rotary heads and the sub-rotary heads have a common plane of rotation.

5. A video tape recording/reproducing apparatus according to claim 3, characterised in that the planes of rotation of the main rotary heads and the sub-rotary heads are spaced apart by an even number of track pitches.

6. A video tape recording/reproducing apparatus according to any of claims 1 or 2, characterised in that the azimuth angle of said first sub-rotary head (S1) is equal to that of said first main rotary head (M1), the azimuth angle of said second sub-rotary head (S2) is equal to that of said second main rotary head (M2), and the plane of rotation of said sub-rotary heads is spaced by an odd number of track pitches from the plane of rotation of said main rotary heads.

7. A video tape recording/reproducing apparatus according any preceding claim, characterised in that the track width of each of said sub-rotary heads is wider than that of each of said main rotary heads.

8. A video tape recording/reproducing apparatus according to any preceding claim, characterised in that the time lag of said signal provided by each of said sub-rotary heads with respect to said signal provided by each of said main rotary heads is compensated by a delay line.

9. A video tape recording/reproducing apparatus according to any preceding claim, characterised in that said signal provided by each of said sub-rotary heads compensates said signal provided by the respective main rotary head in synchronization with reproduced horizontal sync signals.

**Patentansprüche**

1. Videoband-Aufnahme/Wiedergabegerät, enthaltend einen ersten Hauptdrehkopf (M1) und einen zweiten Hauptdrehkopf (M2), deren Azimutwinkel voneinander verschieden sind, einen ersten Unterdrehkopf (S1), der benachbart dem ersten Hauptdrehkopf (M1) befestigt ist, und einen zweiten Unterdrehkopf (S2), der benachbart dem zweiten Hauptdrehkopf (M2) befestigt ist, wobei im Wiedergabebetrieb ein Magnetband (6) mit einer Geschwindigkeit angetrieben sein kann, die von der Geschwindigkeit im Aufwärmebetrieb abweicht, und wobei niedrige Signalpegelabschnitte des vom ersten Hauptdrehkopf (M1) wiedergegebenen Signals durch das vom ersten Unterdrehkopf (S1) wiedergegebene Signal ersetzt wird und niedrige Signalpegelabschnitte des vom zweiten Hauptdrehkopf (M2) wiedergegebenen Signals durch das vom zweiten Unterdrehkopf (S2) wiedergegebene Signal ersetzt wird, gekennzeichnet durch eine erste Einrichtung (53, 58, 55) zum Vergleichen der Amplituden der Signale vom ersten Hauptdrehkopf (M1) und vom ersten Unterdrehkopf (S1), eine zweite Einrichtung (73, 78, 75) zum Vergleichen der Amplituden der Signale vom zweiten Hauptdrehkopf (M2) und vom zweiten Unterdrehkopf (S2), eine dritte Einrichtung (52, 57, 54), die mit der ersten Einrichtung (53, 58, 55) verbunden ist, um für die Wiedergabe das Signal mit der größeren Amplitude auszuwählen, und eine vierte Einrichtung (72, 77, 74), die mit der zweiten Einrichtung (73, 78, 75) verbunden ist, um für die Wiedergabe das Signal mit der größeren Amplitude auszuwählen.

2. Videoband-Aufnahme/Wiedergabegerät nach Anspruch 1, bei dem die erste Einrichtung einen ersten Amplitudendetektor (53) zum Ermitteln der Amplitude des vom ersten Hauptdrehkopf (M1) wiedergegebenen Signals, einen zweiten Amplitudendetektor (58) zum Ermitteln der Amplitude des vom ersten Unterdrehkopf (S1) wiedergegebenen Signals und einen ersten Komparator (55) zum Vergleichen des Signalpegels des Ausgangssignals des ersten Amplitudendetektors (53) mit dem Signalpegel eines Ausgangssignals des zweiten Amplitudendetektors (58) aufweist, wobei die zweite Einrichtung enthält: einen dritten Amplitudendetektor (73) zum Ermitteln der Amplitude eines Ausgangssignals des zweiten Hauptdrehkopfes (M2), einen vierten Amplitudendetektor (78) zum Ermitteln der Amplitude des Ausgangssignals des zweiten Unterdrehkopfs (S2) und einen zweiten Komparator (75) zum Vergleichen des Signalpegels eines Ausgangssignals des dritten Amplitudendetektors (73) mit dem Signalpegel eines Ausgangssignals des vierten Amplitudendetektors (78), wobei die dritte Einrichtung enthält: einen ersten Torkreis (52) zum Durchlassen des Ausgangssignals des ersten Hauptdrehkopfes (M1) entsprechend einem Ausgangssignal des ersten Komparators (55), einen zweiten Torkreis (57) zum Durchlassen des Ausgangssignals des ersten Unterdrehkopfes (S1) entsprechend dem Ausgangssignal des ersten Komparators (55), und eine erste Addierstufe (54) zum Addieren eines Ausgangssignal des ersten Torkreises (52) mit einem Ausgangssignal des zweiten Torkreises (57), wobei die vierte Einrichtung enthält: einen dritten Torkreis (72) zum Durchlassen des Ausgangssignals des zweiten Hauptdrehkopfes (M2) entsprechend einem Ausgangssignal des zweiten Komparators (75), einen vierten Torkreis (77) zum Durchlassen des Ausgangssignals des zweiten Unterdrehkopfes (S2) entsprechend dem Ausgangssignal des zweiten Komparators (75), und eine zweite Addierstufe (74) zum Addieren eines Ausgangssignals des dritten Torkreises (72) mit einem Ausgangssignal des vierten Torkreises (78), und wobei weiterhin ein· erster Schalterkreis (59) zum abwechselnden Auswählen eines Ausgangssignals der ersten Addierstufe (54) und eines Ausgangssignals der zweiten Addierstufe (74) auf einer Bildfeld-zu-Bildfeld-Basis, um dadurch ein kontinuierliches Wiedergabesignal zu erhalten.

3. Videoband-Aufnahme/Wiedergabegerät nach einem der Ansprüche 1 oder 2, dadurch gekennzeichnet, daß der Azimutwinkel des ersten Unterdrehkopfes (S1) gleich jenem des zweiten Hauptdrehkopfes (M2) ist und der Azimutwinkel des zweiten Unterdrehkopfes (S2) gleich jenem des ersten Hauptdrehkopfes (M1) ist.

4. Videoband-Aufnahme/Wiedergabegerät nach Anspruch 3, dadurch gekennzeichnet, daß die Hauptdrehköpfe und die Unterdrehköpfe eine gemeinsame Drehebene haben.

5. Videoband-Aufnahme/Wiedergabegerät nach Anspruch 3, dadurch gekennzeichnet, daß die Drehebenen der Hauptdrehköpfe und der Unterdrehköpfe in einem Abstand zueinander angeordnet sind, der einer geraden Anzahl von Spurteilungen entspricht.

6. Videoband-Aufnahme/Wiedergabegerät nach einem der Ansprüche 1 oder 2, dadurch gekennzeichnet, daß der Azimutwinkel des ersten Unterdrehkopfes (S1) gleich jenem des ersten Hauptdrehkopfes (M1) ist, der Azimutwinkel des zweiten Unterdrehkopfes (S2) gleich jenem des zweiten Hauptdrehkopfes (M2) ist und die Drehebene der Unterdrehköpfe von der Drehebene der Hauptdrehköpfe einen Abstand aufweist, der einer ungeraden Anzahl von Spurteilungen entspricht.

7. Videoband-Aufnahme/Wiedergabegerät nach einem der vorhergehenden Ansprüche, dadurch gekennzeichnet, daß die Spurbreite eines jeden Unterdrehkopfes breiter als jene eines jeden Hauptdrehkopfes ist.

8. Videoband-Aufnahme/Wiedergabegerät nach einem der vorhergehenden Ansprüche, dadurch gekennzeichnet, daß die Zeitverschiebung des von jedem der Unterdrehköpfe gelieferten Signals in bezug auf das von jedem Hauptdrehköpfe gelieferte Signal durch eine Verzögerungsleitung kompensiert wird.

9. Videoband-Aufnahme/Wiedergabegerät nach einem der vorhergehenden Ansprüche, dadurch gekennzeichnet, daß das von jedem der Unterdrehköpfe gelieferte Signal das von dem entsprechenden Hauptdrehkopf gelieferte Signal synchron mit wiedergegebenen Horizontalsynchronsignalen kompensiert.

**Revendications**

1. Appareil d'enregistrement/reproduction sur bande vidéo comportant une première tête tournante principale (M1) et une seconde tête tournante principale (M2) dont les angles d'azimut sont différents entre eux, une première sous-tête tournante (S1) fixée près de la première tête tournante principale (M1) et une seconde sous-tête tournante (S2) fixée près de la seconde tête tournante principale (M2), dans lequel, dans le mode de reproduction, une bande magnétique (6) peut être entraînée à une vitesse différente de celle du mode d'enregistrement, et dans lequel des sections de niveau inférieur du signal reproduit par la première·tête tournante principale (M1) sont remplacées par le signal produit par la première sous-tête tournante (S1), et des sections de niveau inférieur du signal reproduit par la seconde tête tournante principale (M2) sont remplacées par le signal reproduit par la seconde sous-tête tournante (S2), caractérisé par un premier dispositif (53, 58, 55) destiné à comparer les amplitudes des signaux provenant de la première tête tournante principale (M1) et de la première sous-tête tournante (S1), un second dispositif (73, 78, 75) destiné à comparer les amplitudes des signaux provenant de la seconde tête tournante principale (M2) et de la seconde sous-tête tournante (S2), un troisième dispositif (52, 57, 54) connecté audit premier dispositif (53, 58, 55) pour sélectionner, pour la reproduction, le signal ayant la plus grande amplitude, et un quatrième dispositif (72, 77, 74) connecté audit second dispositif (73, 78, 75) pour sélectionner, pour la reproduction, le signal ayant la plus grande amplitude.

2. Appareil d'enregistrement/reproduction sur bande vidéo selon la revendication 1, dans lequel ledit premier dispositif consiste en un premier détecteur d'amplitude (53) qui détecte l'amplitude du signal reproduit par la première tête tournante principale (M1), en un second détecteur d'amplitude (58) qui détecte l'amplitude du signal reproduit par la première sous-tête tournante (S1) et en un premier comparateur (55) qui compare le niveau d'un signal de sortie du premier détecteur d'amplitude (53) avec le niveau d'un signal de sortie du second détecteur d'amplitude (58), dans lequel ledit second dispositif consiste en un troisième détecteur d'amplitude (73) qui détecte l'amplitude du signal de sortie de la seconde tête tournante principale (M2), en un quatrième détecteur d'amplitude (78) qui détecte l'amplitude du signal de sortie de la seconde sous-tête tournante (S2) et en un seconde comparateur (75) comparant le niveau d'un signal de sortie du troisième détecteur d'amplitude (73) avec le niveau du signal de sortie du quatrième détecteur d'amplitude (78), dans lequel ledit troisième dispositif comporte un premier circuit de porte (52) qui contrôle le passage du signal de sortie de la première tête tournante principale (M1) en fonction du signal de sortie du premier comparateur (55), un second circuit de porte (57) qui contrôle le passage du signal de sortie de la première sous-tête tournante (S1) en fonction du signal de sortie du premier comparateur (55), et un premier additionneur (54) qui additionne le signal de sortie du premier circuit de porte (52) avec le signal du second circuit de porte (57), dans lequel ledit quatrième dispositif comporte un troisième circuit de porte (72) pour contrôler le passage du signal de sortie de la seconde tête tournante principale (M2) en fonction du signal de sortie du second comparateur (75), un quatrième circuit de porte (77) qui contrôle le passage du signal de sortie de la seconde sous-tête tournante (S2) en fonction du signal de sortie du second comparateur (75), et un second additionneur (74) qui additionne le signal de sortie du troisième circuit de porte (72) avec le signal de sortie du quatrième circuit de porte (78), et dans lequel est en outre prévu un premier circuit de commutation (59) pour sélectionner alternativement le signal de sortie du premier additionneur (54) et le signal de sortie du second additionneur (74) sur une base de trame par trame, afin d'obtenir un signal reproduit permanent.

3. Appareil d'enregistrement/reproduction sur bande vidéo selon la revendication 1 ou 2, caractérisé en ce que l'angle d'azimut de ladite première sous-tête tournante (S1) est égal à celui de ladite seconde tête tournante principale (M2), et en ce que l'angle d'azimut de ladite seconde sous-tête tournante (S2) est égal à celui de ladite première tête tournante principale (M1).

4. Appareil d'enregistrement/reproduction sur bande vidéo selon la revendication 3, caractérisé en ce que les têtes tournantes principales et les sous-têtes tournantes ont un plan commun de rotation.

5. Appareil d'enregistrement/reproduction sur bande vidéo selon la revendication 3, caractérisé en ce que les plans de rotation des têtes tournantes principales et des sous-têtes tournantes sont espacés l'un de l'autre d'un nombre pair de pas de piste.

6. Appareil d'enregistrement/reproduction sur bande vidéo selon la revendication 1 ou 2, caractérisé en ce que l'angle d'azimut de ladite première sous-tête tournante (S1) est égal à celui de ladite première tête tournante principale (M1), l'angle d'azimut de ladite seconde sous-tête tournante (S2) est égal à celui de ladite seconde tête tournante principale (M2) et le plan de rotation desdites sous-têtes tournantes est espacé d'un nombre impair de pas de piste du plan de rotation desdites têtes tournantes principales.

7. Appareil d'enregistrement/reproduction sur bande vidéo selon l'une quelconque des revendications précédentes, caractérisé en ce que la largeur de piste de chacune desdites sous-têtes tournantes est supérieure à celle de chacune desdites têtes tournantes principales.

8. Appareil d'enregistrement/reproduction sur bande vidéo selon l'une quelconque des revendications précédentes, caractérisé en ce que le retard dudit signal introduit par chacune desdites sous-têtes tournantes par rapport audit signal produit par chacune desdites têtes tournantes principales est compensé par une ligne à retard.

9. Appareil d'enregistrement/reproduction sur bande vidéo selon l'une quelconque des revendications précédentes, caractérisé en ce que ledit signal produit par chacune desdites sous-têtes tournantes compense ledit signal produit par la tête tournante principale respective en synchronisme avec les signaux de synchronisation horizontale reproduits.

0 049 989

FIG. 1.

FIG. 5.

FIG. 6.

ONE TRACK PITCH

1

FIG. 2.

0 049 989

*FIG.3.*

3

FIG. 4.